# EUROPEAN PATENT SPECIFICATION

(11) **EP 3 088 946 B1**
(45) Date of publication and mention of the grant of the patent: **19.06.2019**
(21) Application number: 16164598.1
(22) Date of filing: 11.04.2016
(51) Int. Cl.: G02F 1/1335

(54) **DISPLAY DEVICE COMPRISING REFLECTIVE LAYER**
ANZEIGEVORRICHTUNG MIT REFLEKTIERENDER SCHICHT
DISPOSITIF D'AFFICHAGE COMPRENANT UNE COUCHE RÉFLÉCHISSANTE

(30) Priority: 30.04.2015 KR 20150061129
(43) Date of publication of application: 02.11.2016
(73) Proprietor: Samsung Display Co., Ltd, Gyeonggi-do 17113 (KR)
(72) Inventor: Kim, Iljoo, 105-1702, 264 Hwaseong-si, Gyeonggi-do (KR); Chai, Chongchul, 114-901, 275 Seoul (KR)
(74) Representative: Dr. Weitzel & Partner

(56) References cited:
- US-A1- 2002 126 238
- US-A1- 2003 151 354
- US-A1- 2003 223 121

## Description

### BACKGROUND

### 1. Field

Embodiments of the invention relate to a display device, and more particularly, to a mirror-type display device.

### 2. Description of the Related Art

Display devices are classified into liquid crystal display ("LCD") devices, organic light emitting diode ("OLED") display devices, plasma display panel ("PDP") devices, electrophoretic display ("EPD") devices, and so forth, based on a light emitting scheme thereof.

The LCD device typically includes two substrates disposed opposite to each other, electrodes disposed on the substrates, and a liquid crystal layer interposed between the substrates. Upon voltages being applied to the electrodes, liquid crystal molecules of the liquid crystal layer are rearranged, such that the amount of transmitted light is adjusted in the display device.

As a thickness of display devices decreases in recent times, the display devices have found a wide range of applications. A mirror-type display device is a hybrid-type display device which may function as a mirror when an image is not displayed thereon and function as a display device when an image is displayed thereon.

In a case that the mirror-type display device is used to realize a side view mirror or a rear-view interior mirror of a vehicle, navigation information or other useful information may be displayed on the side view mirror or the rear-view interior mirror, which may help a driver to drive safely and effectively.

As such, the mirror-type display device is applicable to a wide range of industrial field, but further development in technology is desired to allow the mirror-type display device to have a property of a mirror and a property of a display device at the same time. In particular, it is difficult to achieve an aperture ratio sufficient for a display device while reflecting light in a range of visible light sufficiently at the same time. Such a mirror-type display is disclosed in US2003/151354.

US2002/126238 discloses a display device according to the preamble of appended claim 1, comprising a reflective layer having apertures wherein each pixel of the display comprises subpixels having respective differently sized apertures.

It is to be understood that this background of the technology section is intended to provide useful background for understanding the technology and as such disclosed herein, the technology background section may include ideas, concepts or recognitions that were not part of what was known or appreciated by those skilled in the pertinent art prior to a corresponding effective filing date of subject matter disclosed herein.

### SUMMARY

Aspects of embodiments of the invention are directed to a display device having a reflection property and a display property, as defined in appended claim 1, Further embodiments are specified in the dependent claims.

The foregoing is illustrative only and is not intended to be in any way limiting. In addition to the illustrative aspects, embodiments, and features described above, further aspects, embodiments, and features will become apparent by reference to the drawings and the following detailed description.

### BRIEF DESCRIPTION OF THE DRAWINGS

The above and other features of the disclosure of invention will be more clearly understood from the following detailed description taken in conjunction with the accompanying drawings, in which:
FIG. 1 is a schematic plan view illustrating a display device according to an exemplary embodiment;
FIG. 2 is a cross-sectional view taken along line I-I' of FIG. 1;
FIG. 3 is a plan view illustrating a reflection layer according to a reference example;
FIG. 4 is a plan view illustrating a reflection layer according to an alternative exemplary embodiment;
FIG. 5 is a plan view illustrating a display device according to another alternative exemplary embodiment;
FIG. 6 is a cross-sectional view taken along line II -II' of FIG. 5;
FIGS. 7, 8 and 9 are plan views illustrating reflection layers according to another alternative reference example, respectively;
FIG. 10A is a view illustrating a reference example of the display device applied to a rear-view interior mirror of a vehicle;
FIGS. 10B to 10D are an enlarged view of portions of the reflection layer in the portions 'a' 'b' and 'c' of the rear-view interior mirror in FIG. 10A, respectively;
FIG. 11A is a view illustrating a reference example of the display device applied to a side view mirror of a vehicle;
FIGS. 11B to 11D are an enlarged view of portions of the reflection layer in the portions 'a', 'b' and 'c' of the side view mirror in FIG. 11A, respectively.

### DETAILED DESCRIPTION

Hereinafter, embodiments of the disclosure of invention will be described in more detail with reference to the accompanying drawings.

Although the invention can be modified in various manners and have several embodiments, specific embodiments are illustrated in the accompanying drawings and will be mainly described in the specification. However, the scope of the embodiments of the invention is not limited to the specific embodiments and should be construed as including all the changes, equivalents, and substitutions included in the spirit and scope of the invention.

Throughout the specification, when an element is referred to as being "connected" to another element, the element is "directly connected" to the other element, or "electrically connected" to the other element with one or more intervening elements interposed therebetween. As used herein, the singular forms "a," "an," and "the" are intended to include the plural forms, including "at least one," unless the content clearly indicates otherwise. "Or" means "and/or." As used herein, the term "and/or" includes any and all combinations of one or more of the associated listed items. It will be further understood that the terms "comprises," "comprising," "includes" and/or "including," when used in this specification, specify the presence of stated features, integers, steps, operations, elements, and/or components, but do not preclude the presence or addition of one or more other features, integers, steps, operations, elements, components, and/or groups thereof.

It will be understood that, although the terms "first," "second," "third," and the like may be used herein to describe various elements, these elements should not be limited by these terms. These terms are only used to distinguish one element from another element. Thus, "a first element" discussed below could be termed "a second element" or "a third element," and "a second element" and "a third element" can be termed likewise without departing from the teachings herein.

Furthermore, relative terms, such as "lower" or "bottom" and "upper" or "top," may be used herein to describe one element's relationship to another element as illustrated in the Figures. It will be understood that relative terms are intended to encompass different orientations of the device in addition to the orientation depicted in the Figures. For example, if the device in one of the figures is turned over, elements described as being on the "lower" side of other elements would then be oriented on "upper" sides of the other elements. The exemplary term "lower," can therefore, encompasses both an orientation of "lower" and "upper," depending on the particular orientation of the figure. Similarly, if the device in one of the figures is turned over, elements described as "below" or "beneath" other elements would then be oriented "above" the other elements. The exemplary terms "below" or "beneath" can, therefore, encompass both an orientation of above and below.

"About" or "approximately" as used herein is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" can mean within one or more standard deviations, or within ± 30%, 20%, 10%, 5% of the stated value.

Exemplary embodiments are described herein with reference to cross section illustrations that are schematic illustrations of idealized embodiments. As such, variations from the shapes of the illustrations as a result, for example, of manufacturing techniques and/or tolerances, are to be expected. Thus, embodiments described herein should not be construed as limited to the particular shapes of regions as illustrated herein but are to include deviations in shapes that result, for example, from manufacturing. For example, a region illustrated or described as flat may, typically, have rough and/or nonlinear features. Moreover, sharp angles that are illustrated may be rounded. Thus, the regions illustrated in the figures are schematic in nature and their shapes are not intended to illustrate the precise shape of a region and are not intended to limit the scope of the present claims.

Some of the parts which are not associated with the description may not be provided in order to specifically describe embodiments of the invention, and like reference numerals refer to like elements throughout the specification.

Hereinafter, exemplary embodiments of a display device according to the invention are described with respect to a liquid crystal display ("LCD") device. In addition, exemplary embodiments of the display device according to the invention are described with respect to a color filter on array (COA) structure. However, the invention is not limited thereto, and alternatively, the display device according to the invention may also be applicable to a structure in which a thin film transistor and a color filter are disposed on the same substrate.

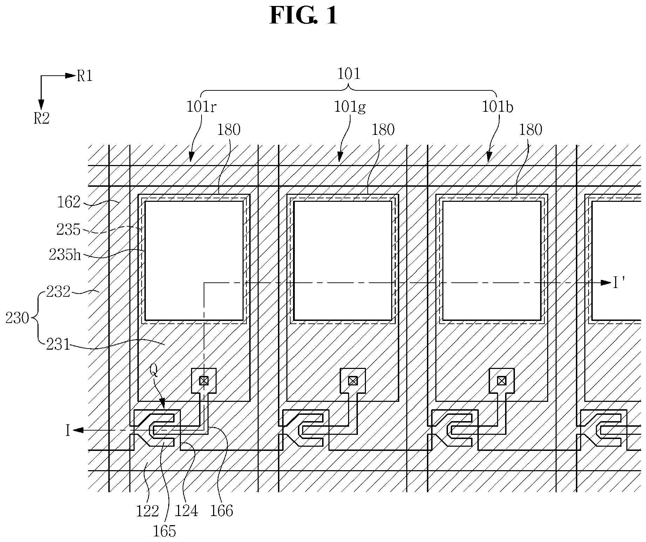

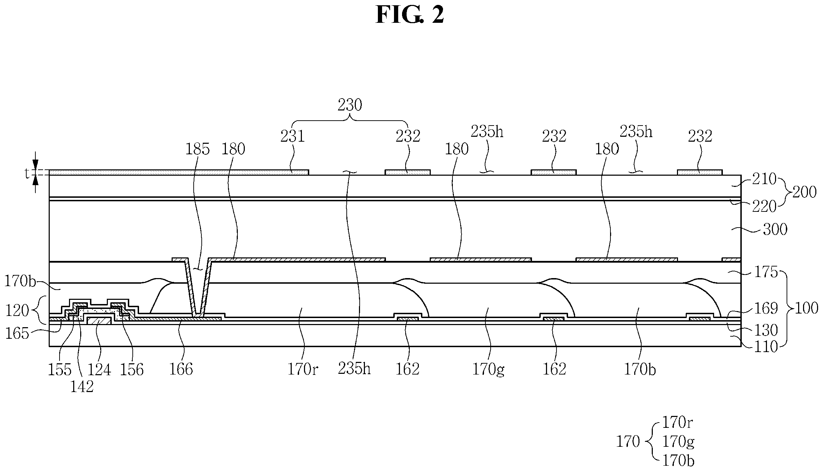

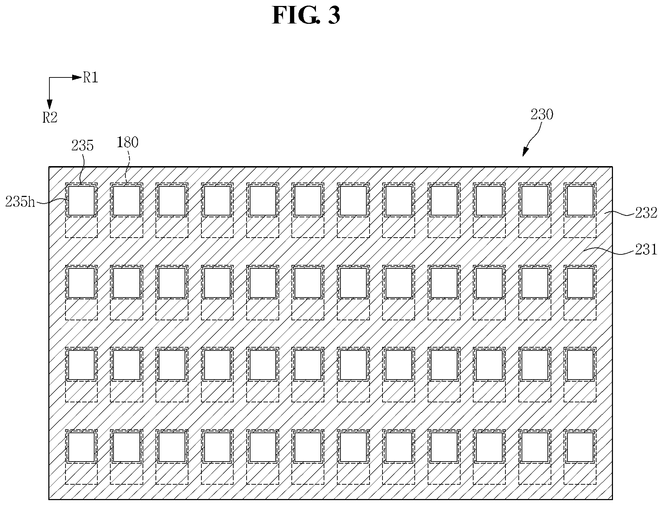

FIG. 1 is a schematic plan view illustrating a display device according to an exemplary embodiment; FIG. 2 is a cross-sectional view taken along line I-I' of FIG. 1; and FIG. 3 is a plan view illustrating a reflection layer according to a reference example.

Figures 1 and 2 show an exemplary embodiment of the display device including a lower panel 100, an upper panel 200 disposed opposite to the lower panel 100, and a liquid crystal layer 300 interposed between the lower panel 100 and the upper panel Figure 3 shows a reference example of the display device.

The lower panel 100 includes a lower substrate 110 on which a plurality of pixel units (or pixel areas) 101, each including red, green and blue pixel units 101r, 101g and 101b, are defined and arranged in a matrix form, a layer structure 120 disposed on the lower substrate 110 and including a thin film transistor Q, a plurality of color filters 170 disposed on the layer structure 120 and including red, green and blue color filters 170r, 170g and 170b, a planarization layer 175 on the plurality of color filters 170, and a pixel electrode 180 on the planarization layer 175.

The lower substrate 110 may be an insulating substrate including or formed of a transparent material, e.g., transparent glass such as soda lime glass or borosilicate glass, plastic, or the like.

Gate wirings 122 and 124 for transmitting a gate signal are disposed on the lower substrate 110. The gate wirings 122 and 124 include a gate line 122 extending in a direction, for example, a first direction R1, and a gate electrode 124 protruding from the gate line 122 or defined by a protrusion of the gate line 112. The gate electrode 124 may constitute a three-terminal structure of the thin film transistor Q, along with a source electrode 165 and a drain electrode 166 which will be described later in detail.

Although not illustrated, a storage wiring (not illustrated), which defines a storage capacitor along with the pixel electrode 180, may further be disposed on the lower substrate 110. The storage wiring, which may be provided or formed simultaneously with the gate wirings 122 and 124, may be disposed in or on a same layer as a layer in or on which the gate wirings 122 and 124 are disposed, and may include or be formed of a material substantially the same as that of the gate wirings 122 and 124.

The gate wirings 122 and 124 may include or be formed of an aluminum (Al) based metal such as Al or an Al alloy, a silver (Ag) based metal such as Ag or an Ag alloy, a copper (Cu) based metal such as Cu or a Cu alloy, a molybdenum (Mo) based metal such as Mo or a Mo alloy, chromium (Cr), titanium (Ti), tantalum (Ta), or the like.

In an exemplary embodiment, the gate wirings 122 and 124 may have a multilayer structure including two conductive layers (not illustrated) having different physical properties from each other.

In such an embodiment, one of the two conductive layers (not illustrated) may include or be formed of a metal having low resistivity, for example, an Al-based metal, an Ag-based metal, or a Cu-based metal, such that a signal delay or a voltage drop of the gate wirings 122 and 124 may be reduced.

In such an embodiment, the other of the two conductive layers may include or be formed of a material having a high contact property with another material, e.g., with indium tin oxide ("ITO") and indium zinc oxide ("IZO"). In one exemplary embodiment, for example, such a material having the high contact property may include a Mo-based metal, Cr, Ti, Ta, or the like.

In one exemplary embodiment, for example, such a multilayer structure including the two conductive layers may include a Cr lower layer and an Al upper layer, an Al lower layer and a Mo upper layer, or a Ti lower layer and a Cu upper layer. However, the invention is not limited thereto, and alternatively, the gate wirings 122 and 124 may be modified to include or be formed of various metals and conductors.

A gate insulating layer 130 may be disposed on the lower substrate 110 and the gate wirings 122 and 124. In an exemplary embodiment, the gate insulating layer 130 may include silicon oxide (SiOₓ) or silicon nitride (SiNₓ). In such an embodiment, the gate insulating layer 130 may further include aluminum oxide, titanium oxide, tantalum oxide, or zirconium oxide.

A semiconductor layer 142 for forming a channel of the thin film transistor Q may be disposed on the gate insulating layer 130 to overlap at least the gate electrode 124. In an exemplary embodiment, the semiconductor layer 142 may include or be formed of amorphous silicon ("a-Si"), or an oxide semiconductor including at least one of gallium (Ga), indium (In), tin (Sn), and zinc (Zn).

Ohmic contact layers 155 and 156 may be disposed on the semiconductor layer 142. The ohmic contact layers 155 and 156 may serve to enhance a contact property between the source electrode 165 and/or the drain electrode 166, which will be described later in detail, and the semiconductor layer 142.

In an exemplary embodiment, the ohmic contact layers 155 and 156 may include or be formed of amorphous silicon doped with n-type impurities at high concentration ("n+a-Si"). In an alternative exemplary embodiment, where the contact property between the source electrode 165 and/or the drain electrode 166 and the semiconductor layer 142 is sufficiently secured, the ohmic contact layers 155 and 156 may be omitted.

In an exemplary embodiment, data wirings 162, 165 and 166 may be disposed on the ohmic contact layers 155 and 156 and the gate insulating layer 130.

The data wirings 162, 165 and 166 include a data line 162 extending in a direction intersecting the gate line 122, for example, a second direction R2, the source electrode 165 branched off from the data line 162 to extend on to the semiconductor layer 142, and the drain electrode 166 spaced apart from the source electrode 165 and disposed on the semiconductor layer 142 opposite to the source electrode 165 with respect to the gate electrode 124 or a channel area of the thin film transistor Q. In one exemplary embodiment, the data line 162 may define the pixel unit 101 along with the gate line 122, but not being limited thereto.

In an exemplary embodiment, the drain electrode 166 may extend from an upper portion of the semiconductor layer 142 to a lower portion of the pixel electrode 180.

A protection layer 169 may be disposed over a structure defined by the data wirings 162, 165 and 166 and the layers therebelow. The protection layer 169 may have a monolayer structure or a multilayer structure including, for example, silicon oxide, silicon nitride, a photosensitive organic material, or a low dielectric constant insulating material such as a-Si:C:O or a-Si:O:F. The structure or feature of the thin film transistor Q of exemplary embodiments of the invention is not limited to those described above, and the layer structure 120 including the thin film transistor Q may be modified in various manners.

The plurality of color filters 170 including the red color filter 170r, the green color filter 170g and the blue color filter 170b may be disposed on the layer structure 120.

The red color filter 170r, the green color filter 170g and the blue color filter 170b may be disposed to correspond to the red pixel unit 101r, the green pixel unit 101g and the blue pixel unit 101b, respectively.

The red color filter 170r, the green color filter 170g and the blue color filter 170b may be disposed in a stripe form elongated along the second direction R2, to correspond to the pixel unit 101, for example, the red pixel unit 101r, the green pixel unit 101g and the blue pixel unit 101b, respectively.

Adjacent color filters of the color filters 170 may be spaced apart from one another, or alternatively, edges thereof at a boundary therebetween may overlap one another.

The planarization layer 175 may be disposed on the plurality of color filters 170. The planarization layer 175 may have a monolayer structure or a multilayer structure including, for example, silicon oxide, silicon nitride, a photosensitive organic material, or a low dielectric constant insulating material such as a-Si:C:O or a-Si:O:F.

A contact hole 185 may be defined or formed in the protection layer 169, the color filter 170 and the planarization layer 175 such that a portion of the drain electrode 166, for example, an end portion of the drain electrode 166 disposed below the pixel electrode 180, is exposed through the contact hole 185.

The pixel electrode 180 may be disposed on the planarization layer 175 and electrically connected to the drain electrode 166 through the contact hole 185. The pixel electrode 180 may include or be formed of a transparent conductive material such as ITO or IZO, for example.

Although not illustrated, a lower alignment layer may be disposed on the pixel electrode 180. The lower alignment layer may be a homeotropic layer and may include a photo-sensitive material.

The lower alignment layer may include or be formed of at least one selected from polyamic acid, polysiloxane, and polyimide.

The upper panel 200 may include an upper substrate 210, a common electrode 220 and a reflection layer 230.

The upper substrate 210 may include an insulating substrate including or formed of a transparent material, such as glass or plastic, for example. The common electrode 220 may include or be formed of a transparent conductive material such as ITO and IZO, for example.

The reflection layer 230 is disposed on the upper substrate 210. In an exemplary embodiment, as described above, the reflection layer 230 may be disposed on a surface of the upper substrate 210, which is disposed opposite to the lower substrate 110, but the invention is not limited thereto. In an alternative exemplary embodiment, the reflection layer 230 may be disposed on another surface of the upper substrate 210 which is disposed to face the lower substrate 110.

In another alternative reference example, the reflection layer 230 may be disposed on the lower substrate 110 and insulated from the pixel electrode 180.

The reflection layer 230 may include a metal which reflects light in a range of visible light. In one exemplary embodiment, for example, the reflection layer 230 may include at least one of Al, Ag, Ti, and Cr.

In an exemplary embodiment, the reflection layer 230 may have a thickness t in a range of about 10 nanometers (nm) to about 300 nm. When the reflection layer 230 has a thickness of 10 nm or less, it may be difficult for the reflection layer 230 to have a reflection property; and when the reflection layer 230 has a thickness of 300 nm or more, it may be difficult to achieve a thin film structure of the display device.

In one exemplary embodiment, for example, where the reflection layer 230 includes or is formed of Ti, the reflection layer 230 may have a thickness of 10 nm or more to exhibit a reflection property. In such an embodiment, the reflection layer 230 may have a predetermined thickness to have a reflectivity of about 50 % or more.

The reflection layer 230 may include a first reflection unit 231 extending along the first direction R1 and a second reflection unit 232 extending along the second direction R2. The second reflection unit 232 may connect the first reflection units 231.

In such an embodiment, as shown in FIG. 1, the first reflection unit 231 may be disposed on or to cover the gate line 122 and the thin film transistor Q, and may be disposed further on or to cover a portion of the pixel electrode 180. The second reflection unit 232 may be disposed on or to cover the data line 162.

The first reflection unit 231 and the second reflection unit 232 may reflect externally incident light to be directed back outwards and at the same time, may effectively prevent light supplied from a backlight unit (not illustrated) from being dissipated outwards. In such an embodiment, the reflection layer 230 may have a light shielding function. Accordingly, an additional light shielding member may be omitted in the display device, and thus the thickness thereof may be decreased.

The reflection layer 230 has an aperture region 235 which entirely or partially overlaps the pixel electrode 180, and at least one aperture 235h is defined or formed in the aperture region 235. In an exemplary embodiment, the aperture region 235 is in at least a portion of the pixel electrode 180 when viewed from a top plan view. In one exemplary embodiment, for example, an aperture 235h defined in the reflection layer 230 may have a size substantially the same as that of the aperture region 235.

The aperture region 235 is a region through which the light supplied from the backlight unit (not illustrated) may transmit or may not transmit based on an alignment of liquid crystal molecules in the liquid crystal layer 300.

The aperture region 235 may have a size which accounts for about 50 % or more and about 100 % or less of a size of the pixel electrode 180, that is, a size in a range of about 50 % to about 100 % of the size of the pixel electrode 180. Herein, the size of the aperture region 235 and the size of the pixel electrode 180 may a size or area thereof when viewed from a top plan view as shown in FIG. 1. As the size of the aperture region 235 increases, the display property of the display device may be enhanced; and as the size of the aperture region 235 decreases, the reflectivity of the display device may be enhanced.

In an exemplary embodiment, although not illustrated, the upper panel 200 may further include an upper alignment layer. The upper alignment layer may be disposed on the common electrode 220. The upper alignment layer may include or be formed of a material substantially the same as that of the aforementioned lower alignment layer.

When surfaces of the lower substrate 110 and the upper substrate 210 facing each other therebetween, e.g., inner surfaces, are defined as upper surfaces of the corresponding substrates, respectively, and surfaces opposite to the upper surfaces, e.g., outer surfaces, are defined as lower surfaces of the corresponding substrates, respectively, an upper polarizer may further be disposed on the lower surface of the lower substrate 110 and a lower polarizer may further be disposed on the lower surface of the upper substrate 210.

The liquid crystal layer 300 may include nematic liquid crystal materials having positive dielectric anisotropy. The nematic liquid crystal molecules of the liquid crystal layer 300 may have a structure in which a major or longitudinal axis thereof is parallel to one of the lower panel 100 and the upper panel 200, and the direction of the major axis is spirally twisted at an angle of about 90 degrees from a rubbing direction of the alignment layer of the lower panel 100 to the upper panel 200. Alternatively, the liquid crystal layer 300 may include homeotropic liquid crystal materials, in lieu of the nematic liquid crystal materials.

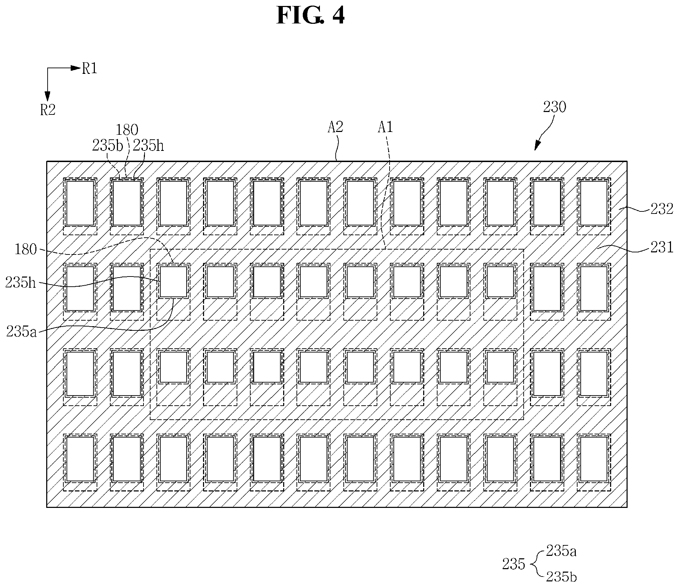

FIG. 4 is a plan view illustrating a reflection layer 230 according to an embodiment of the present invention. The reflection layer in FIG. 4 is substantially the same as the reflection layer shown in FIG. 3 except for the aperture regions 235. The same or like elements shown in FIG. 4 have been labeled with the same reference characters as used above to describe the exemplary embodiments of the reflection layer shown in FIG. 3, and any repetitive detailed description thereof may hereinafter be omitted or simplified.

In an exemplary embodiment, as shown in FIG. 4, the reflection layer 230 may include a first reflection unit 231 extending along a first direction R1 and a second reflection unit 232 extending along a second direction R2.

The reflection layer 230 may have an aperture region 235 which entirely or partially overlaps the pixel electrode 180, and at least one aperture 235h may be defined or formed in the aperture region 235. In such an embodiment, the reflection layer 230 may have an aperture 235h having a size substantially the same as that of the aperture region 235.

In such an embodiment, the reflection layer 230 may be divided into two or more areas each including the aperture regions 235 having different sizes. As illustrated in FIG. 4, the reflection layer 230 has a first area A1, which is a center portion, and a second area A2 around the first area A1. An aperture region 235a of the first area A1 may have a size which accounts for about 50 % or more to about 70 % or less of a size of a pixel electrode 180, and an aperture region 235b of the second area A2 may have a size which accounts for about 70 % to about 100 % of the size of the pixel electrode 180.

In such an embodiment, the first area A1, which is the center portion of the reflection layer 230, is an area which primarily serves the reflection property of the display device, and the second area A2 is an area which primarily serves the display property thereof.

The first area A1 and the second area A2 of the reflection layer 230, however, are merely given by way of example, and in other alternative exemplary embodiments, the reflection layer 230 may include two or more areas, and may be divided into multiple regions based on a purpose of use thereof.

Hereinafter, other alternative exemplary embodiments will be described in detail.

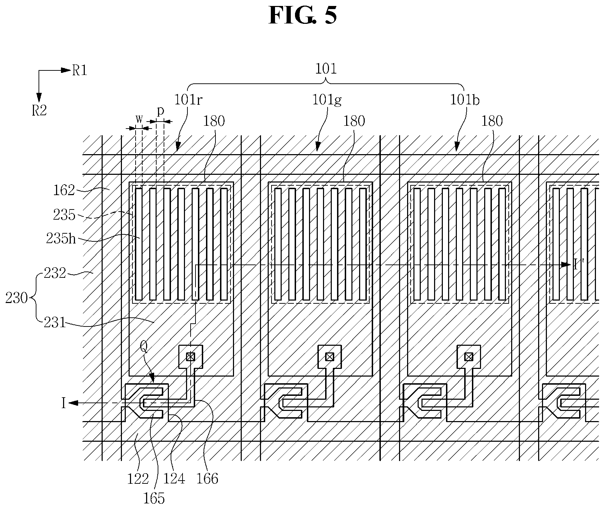

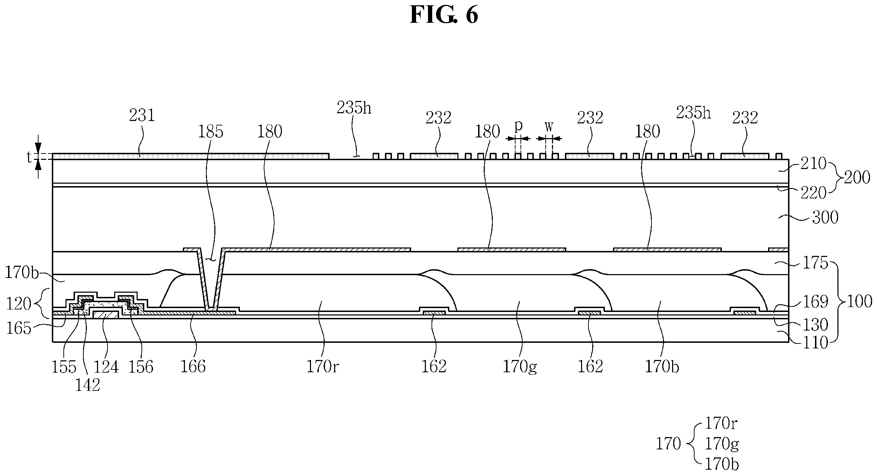

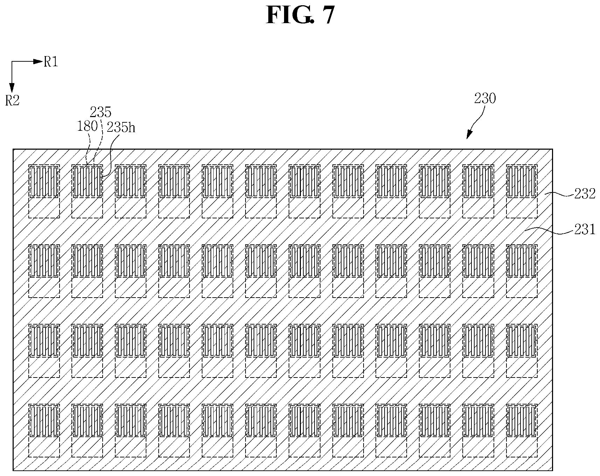

FIG. 5 is a plan view illustrating a display device according to another alternative exemplary embodiment; FIG. 6 is a cross-sectional view taken along line II - II' of FIG. 5; and FIG. 7 is a plan view illustrating a reflection layer 230 according to another reference example. The display device in FIGS. 5 to 7 is substantially the same as the display device shown in FIGS. 1 to 3 except for the reflection layer. The same or like elements shown in FIGS. 5 to 7 have been labeled with the same reference characters as used above to describe the exemplary embodiments of the display device shown in FIGS. 1 to 3, and any repetitive detailed description thereof may hereinafter be omitted or simplified.

In reference to FIGS. 5 and 6, an exemplary embodiment, and Fig. 7, a reference example of the display device includes a lower panel 100, an upper panel 200 disposed opposite to the lower panel 100, and a liquid crystal layer 300 interposed between the lower panel 100 and the upper panel 200.

The lower panel 100 may include a lower substrate 110, on which a plurality of pixel units 101, each including red, green and blue pixel units 101r, 101g and 101b, are defined and arranged in a matrix form, a layer structure 120 disposed on the lower substrate 110 and including a thin film transistor Q, a plurality of color filters 170 disposed on the layer structure 120 and including red, green, and blue color filters 170r, 170g, and 170b, a planarization layer 175 on the plurality of color filters 170, and a pixel electrode 180 on the planarization layer 175.

The upper panel 200 may include an upper substrate 210, a common electrode 220 and a reflection layer 230.

The upper substrate 210 may include an insulating substrate including or formed of a transparent material, such as glass or plastic, for example. The common electrode 220 may include or be formed of a transparent conductive material such as ITO and IZO.

The reflection layer 230 is disposed on the upper substrate 210. The reflection layer 230 may include a first reflection unit 231 extending along the first direction R1 and a second reflection unit 232 extending along the second direction R2.

The reflection layer 230 may include a metal which reflects light in a range of visible light. In one exemplary embodiment, for example, the reflection layer 230 may include at least one of Al, Ag, Ti, and Cr. In such an embodiment, the reflection layer 230 may have a thickness t in a range of about 10 nm to about 300 nm.

The reflection layer 230 has an aperture region 235 which entirely or partially overlaps a pixel electrode 180, and at least one aperture 235h is defined or formed in the aperture region 235.

In an exemplary embodiment and reference example, as shown in FIGS. 5 and 7, respectively, a plurality of apertures 235h extending along the second direction R2 may be defined in the aperture region 235.

The aperture 235h may have a width w in a range of about 50 nm to about 300 nm, and may have an interval p in a range of about 10 nm to about 100 nm with an aperture 235h adjacent thereto. Herein, a width of the aperture 235h may be defined as a length thereof in a direction perpendicular to the extending direction thereof.

In an exemplary embodiment, a plurality of apertures 235h having a predetermined width w and a predetermined interval p may be defined in the aperture region 235 of the reflection layer 230, thus defining a wire grid pattern.

The wire grid pattern refers to a stripe pattern having a line width and an interval which are less than a magnitude of red, green and blue wavelengths corresponding to a range of visible lights that humans may perceive. When light supplied from a backlight unit is incident onto the wire grid pattern, a polarized light which is parallel to the wire grid pattern may be reflected off, and a polarized light which is perpendicular to the wire grid pattern may transmit therethrough.

Accordingly, in such an embodiment, the reflection layer 230 may reflect a polarized light parallel to the second direction R2, and may transmit a polarized light perpendicular to the second direction R2.

In an exemplary embodiment, an additional polarizer of the display device may be omitted therefrom and polarization of the light supplied from the backlight unit may be performed by the reflection layer 230, such that a thickness of the display device may be decreased and a manufacturing cost thereof may be reduced.

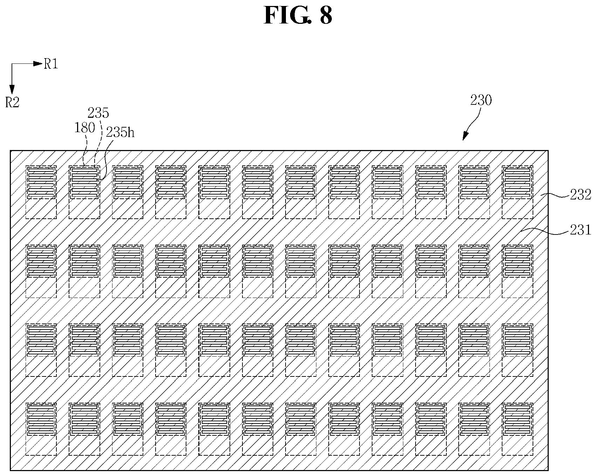

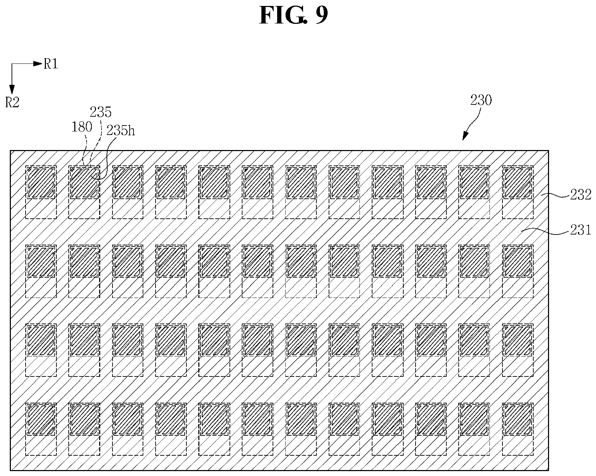

FIGS. 8 and 9 are plan views illustrating other reference example of the reflection layer 230, respectively. The reflection layers in FIGS. 8 and 9 is substantially the same as the reflection layer shown in FIG. 7 except for the aperture defined therein. The same or like elements shown in FIGS. 8 and 9 have been labeled with the same reference characters as used above to describe the exemplary embodiments of the reflection layer shown in FIG. 7, and any repetitive detailed description thereof may hereinafter be omitted or simplified.

The reflection layer 230 may include a first reflection unit 231 extending along a first direction R1 and a second reflection unit 232 extending along a second direction R2.

The reflection layer 230 may include a metal which may reflect light in a range of visible light. For example, the reflection layer 230 may include at least one of Al, Ag, Ti, and Cr. In such an example, the reflection layer 230 may have a thickness t in a range of about 10 nm to about 300 nm.

The reflection layer 230 may have an aperture region 235 which entirely or partially overlaps a pixel electrode 180, and at least one aperture 235h is defined or formed in the aperture region 235.

As shown in FIG. 8, a plurality of apertures 235h extending along the first direction R1 is defined in the aperture region 235.

The aperture 235h may have a width w in a range of about 50 nm to about 300 nm, and may have an interval p in a range of about 10 nm to about 100 nm with an aperture 235h adjacent thereto.

A plurality of apertures 235h having a predetermined width w and a predetermined interval p is defined in the aperture region 235, thus defining a wire grid pattern.

In an alternative example, as shown in FIG. 9, a plurality of apertures 235h extending to form a predetermined angle with respect to a first direction R1 is defined in the aperture region 235. The aperture 235h may form an angle in a range of about 30 degrees to about 60 degrees, for example, about 45 degrees, with the first direction R1.

The aperture 235h may have a width in a range of about 50 nm to about 300 nm, and may have an interval p in a range of about 10 nm to about 100 nm with an aperture 235h adjacent thereto.

A plurality of apertures 235h having a predetermined width w and a predetermined interval p is defined in the aperture region 235, thus defining a wire grid pattern.

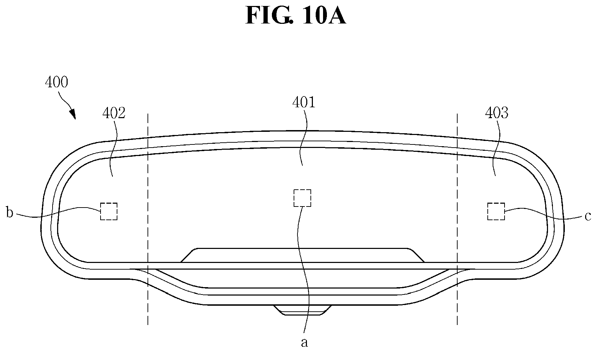

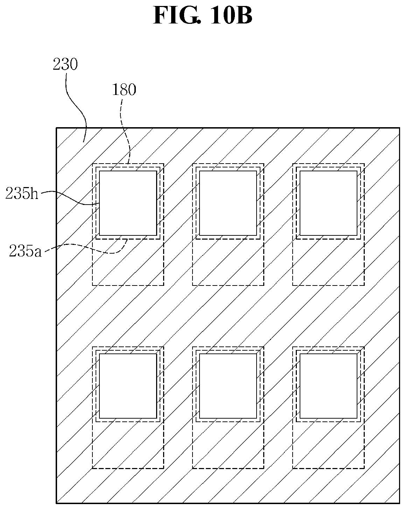

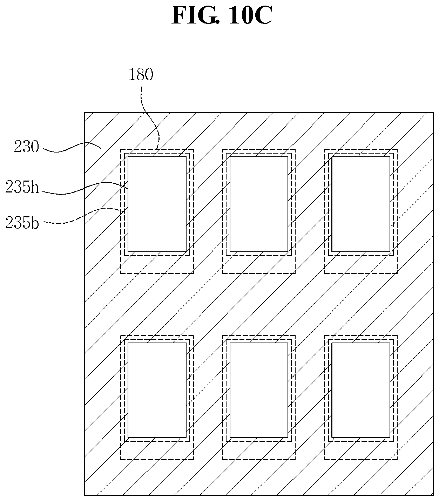

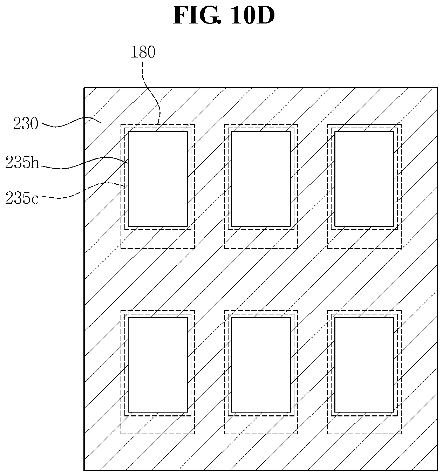

FIG. 10A is a view illustrating reference example of the display device applied to a rear-view interior mirror 400 of a vehicle, and FIGS. 10B to 10D are an enlarged view of portions of the reflection layer in the portions 'a' 'b' and 'c' of the rear-view interior mirror 400 in FIG. 10A, respectively. FIGS. 10B to 10D illustrate portions of the reflection layer disposed in different areas of the rear-view interior mirror 400 of a vehicle, respectively, in which the aperture regions of the different portions of the reflection layer have different sizes from each other.

In reference to FIGS. 10A to 10D, the rear-view interior mirror 400 of a vehicle may be divided into a plurality of portions including a center portion 401 and side portions 402 and 403 on both sides of the center portion 401. Such division of the areas is merely given by way of example, and may be modified in various manners.

The portions of the reflection layer 230 disposed in the center portion 401 and the side portions 402 and 403 may be integrally formed as a single unitary and indivisible unit, and may each have aperture regions 235 having different sizes based on each area. In the reflection layer 230 an aperture 235h having substantially the same size as that of the aperture region 235 may be defined.

For example, an aperture region 235a of the reflection layer 230 disposed in the center portion 401 of the rear-view interior mirror 400 may have a size which accounts for about 70 % or more to about 80 % or less of a size of a pixel electrode 180, and an aperture regions 235b and 235c of the reflection layer 230 disposed in the side portions 402 and 403 of the rear-view interior mirror 400 may have a size which accounts for about 80 % to about 100 % of the size of the pixel electrode 180.

In such an example, the center portion 401 of the rear-view interior mirror 400 may primarily serve the reflection function of the display device, and may serve as a main mirror. The center portion 401 of the rear-view interior mirror 400 may display a warning sign, navigation information, or other useful information. For example, the useful information may include vehicle running information, rear camera information, lane detection information, and the like.

Side view mirrors 402 and 403 may primarily serve the display function of the display device, and may display navigation information, night vision, vehicle running information, rear camera information, lane detection information, and the like, for example.

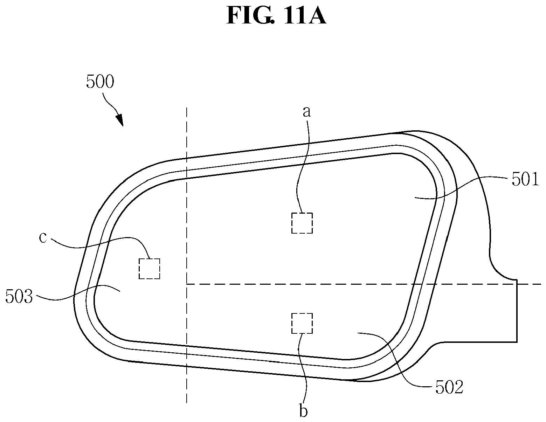

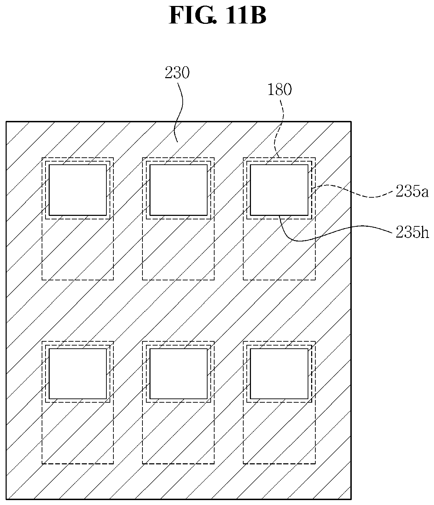

FIG. 11A is a view illustrating reference example of the display device applied to a side view mirror 500 of a vehicle, and FIGS. 11B to 11D are an enlarged view of different portions of the reflection layer in the portions 'a', 'b' and 'c' of the side view mirror 500 in FIG. 11A, respectively. FIGS. 11B to 11D illustrate portions of the reflection layer disposed on different areas of the side view mirror 500 of a vehicle, respectively and having aperture regions of different sizes from each other.

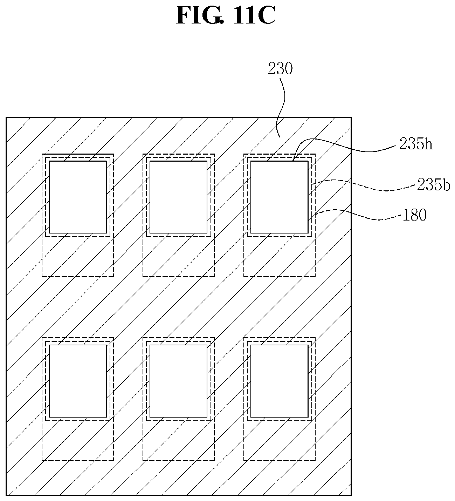

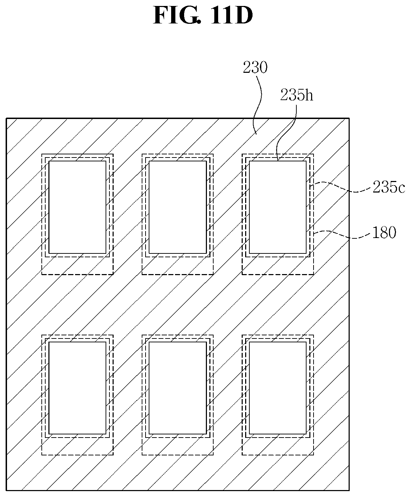

In reference to FIG. 11, in reference example, the side view mirror 500 of a vehicle may be divided into a plurality of portions including an inner upper portion 501, an inner lower portion 502, and an outer portion 503. The division of the areas is merely given by way of example, and may be modified in various manners.

The portion of the reflection layer 230 disposed in the inner upper portion 501, the inner lower portion 502, and the outer portion 503 may be integrally formed as a single unitary and indivisible unit, and may each have aperture regions 235 having different sizes based on each area. In the reflection layer 230, an aperture 235h having substantially the same size as that of the aperture region 235 is defined.

For example, an aperture region 235a of the reflection layer 230 disposed in the inner upper portion 501 may have a size which accounts for about 50 % or more to about 70 % or less of a size of a pixel electrode 180, an aperture region 235b of the reflection layer 230 disposed in the inner lower portion 502 may have a size which accounts for about 70 % or more to about 80 % or less of the size of the pixel electrode 180, and an aperture region 235c of the reflection layer 230 disposed in the outer portion 503 may have a size which accounts for about 70 % or more to about 80 % or less of the size of the pixel electrode 180.

The inner upper portion 501 may primarily serve the reflection function of the display device, and may serve as a main mirror. In such an example, the inner upper portion 501 may serve a display function to display a warning sign.

The inner lower portion 502 may primarily serve the display function of the display device, and may display parking lane information and other useful information. For example, the other useful information may include vehicle running information, rear camera information, lane detection information, and the like.

The outer portion 503 may primarily serve the display function of the display device, and may display navigation information, night vision, vehicle running information, rear camera information, lane detection information, and the like, for example.

As set forth hereinabove, according to exemplary embodiments of the invention, a display device includes a reflection layer having an aperture which entirely or partially overlaps a pixel electrode, and thereby a mirror-type display device may be realized.

According to exemplary embodiments of the invention, the apertures defined in the reflection layer of the display device have different sizes based on locations thereof in the display device, and thereby a mirror-type display device having a reflection property and a display property may be realized.

According to exemplary embodiments of the invention, the display device includes a wire grid polarizer defined in the reflection layer, and thus an additional polarizer may be omitted, such that a thickness of the display device may be decreased and a manufacturing cost thereof may be reduced.

Further, according to exemplary embodiments of the invention, the reflection layer serves to divide adjacently disposed pixels in the display device, and thus an additional black matrix may be omitted, such that a thickness of the display device may be decreased and a manufacturing cost thereof may be reduced.

. Various features of the above described and other exemplary embodiments can be mixed and matched in any manner, to produce further exemplary embodiments consistent with the invention as defined in the appended claims.

## Claims

1. A display device comprising:
a lower substrate (110);
an upper substrate (210) disposed opposite to the lower substrate (110);
a liquid crystal layer (300) between the lower substrate (110) and the upper substrate (210);
a plurality of gate lines (122) disposed on the lower substrate (110) and elongated in a first direction,
a plurality of data lines (162) disposed on the lower substrate (110) insulated from the gate lines (122) and elongated in a second direction which intersects the first direction,
a plurality of thin film transistors (Q) each connected to a corresponding one of the plurality of the gate lines (122) and a corresponding one of the plurality of the data lines (162);
a plurality of pixel electrodes (180) each connected to a corresponding one of the thin film transistors (Q); and
a reflection layer (230) on the upper substrate (210),
wherein the reflection layer (230) has a plurality of apertures (235), each of which being located so as to correspond to at least a portion of a respective one of the pixel electrodes (180);
**characterized in that**
the reflection layer (230) is divided into a first area (A1) which is a center portion of the reflection layer (230) and a second area (A2) which surronds the first area (A1), wherein the apertures (235 h) defined in the reflection layer (230) in the first area (A1) have a size different from the apertures (235h) in the second area (A2).

2. The display device of claim 1, wherein the reflection layer (230) comprises:
a first reflection unit (231) extending along a first direction (R1); and
a second reflection unit (232) extending along a second direction (R2).

3. The display device of at least one of claim 1 or 2 , wherein the reflection layer (230) comprises a metal.

4. The display device of claim 3, wherein the metal comprises at least one of aluminum (Al), silver (Ag), titanium (Ti), and chromium (Cr).

5. The display device of at least one of claims 1 to 4 , wherein the reflection layer (230) has a thickness in a range of about 10 nanometers to about 300 nanometers.

6. The display device of at least one of claims 1 to 5 , wherein each aperture (235) has a size in a range of about 50 % to about 100 % of a size of the corresponding pixel electrode (180).

## Patentansprüche

1. Anzeigevorrichtung, umfassend:
ein unteres Substrat (110);
ein oberes Substrat (210), das gegenüber dem unteren Substrat (110) angeordnet ist;
eine Flüssigkristallschicht (300) zwischen dem unteren Substrat (110) und dem oberen Substrat (210);
mehrere Gate-Leitungen (122), die auf dem unteren Substrat (110) angeordnet sind und sich in einer ersten Richtung ausdehnen;
mehrere Datenleitungen (162), die auf dem unteren Substrat (110) isoliert von den Gate-Leitungen (122) angeordnet sind und sich in einer zweiten Richtung ausdehnen, die sich mit der ersten Richtung schneidet;
mehrere Dünnschichttransistoren (Q), die jeweils mit einer entsprechenden der mehreren Gate-Leitungen (122) und einer entsprechenden der mehreren Datenleitungen (162) verbunden sind;
mehrere Pixelelektroden (180), die jeweils mit einem entsprechenden der Dünnschichttransistoren (Q) verbunden sind; und
eine Reflexionsschicht (230) auf dem oberen Substrat (210),
wobei die Reflexionsschicht (230) mehrere Öffnungen (235) aufweist, die jeweils derart angeordnet sind, dass sie zumindest einem Abschnitt einer jeweiligen der Pixelelektroden (180) entsprechen;
**dadurch gekennzeichnet, dass**
die Reflexionsschicht (230) in einen ersten Bereich (A1), bei dem es sich um einen mittleren Abschnitt der Reflexionsschicht (230) handelt, und einen zweiten Bereich (A2), welcher den ersten Bereich (A1) umgibt, eingeteilt ist, wobei die in der Reflexionsschicht (230) definierten Öffnungen (235h) in dem ersten Bereich (A1) eine andere Größe als die Öffnungen (235h) in dem zweiten Bereich (A2) aufweisen.

2. Anzeigevorrichtung nach Anspruch 1, wobei die Reflexionsschicht (230) umfasst:
eine erste Reflexionseinheit (231), die sich entlang einer ersten Richtung (R1) erstreckt; und
eine zweite Reflexionseinheit (232), die sich entlang einer zweiten Richtung (R2) erstreckt.

3. Anzeigevorrichtung nach mindestens einem von Anspruch 1 oder 2, wobei die Reflexionsschicht (230) ein Metall umfasst.

4. Anzeigevorrichtung nach Anspruch 3, wobei das Metall mindestens eines von Aluminium (Al), Silber (Ag), Titan (Ti) und Chrom (Cr) umfasst.

5. Anzeigevorrichtung nach mindestens einem der Ansprüche 1 bis 4, wobei die Reflexionsschicht (230) eine Dicke in einem Bereich von etwa 10 Nanometern bis etwa 300 Nanometern aufweist.

6. Anzeigevorrichtung nach mindestens einem der Ansprüche 1 bis 5, wobei jede Öffnung (235) eine Größe in einem Bereich von etwa 50 % bis etwa 100 % einer Größe der entsprechenden Pixelelektrode (180) aufweist.

## Revendications

1. Dispositif d'affichage comprenant :
un substrat inférieur (110) ;
un substrat supérieur (210) disposé opposé au substrat inférieur (110) ;
une couche de cristaux liquides (300) entre le substrat inférieur (110) et le substrat supérieur (210) ;
une pluralité de lignes de grille (122) disposées sur le substrat inférieur (110) et allongées dans une première direction,
une pluralité de lignes de données (162) disposées sur le substrat inférieur (110) isolées des lignes de grille (122) et allongées dans une seconde direction qui coupe la première direction,
une pluralité de transistors en couche mince (Q), chacun connecté à l'une correspondante de la pluralité des lignes de grille (122) et l'une correspondante de la pluralité des lignes de données (162) ;
une pluralité d'électrodes de pixel (180), chacune connectée à l'un correspondant des transistors en couche mince (Q) ; et
une couche de réflexion (230) sur le substrat supérieur (210),
dans lequel la couche de réflexion (230) comporte une pluralité d'ouvertures (235), dont chacune est située de manière à correspondre à au moins une portion de l'une respective des électrodes de pixel (180) ;
**caractérisé en ce que**
la couche de réflexion (230) est divisée en une première zone (A1) qui est une portion centrale de la couche de réflexion (230) et une seconde zone (A2) qui entoure la première zone (A1), dans lequel les ouvertures (235h) définies dans la couche de réflexion (230) dans la première zone (A1) ont une taille différente des ouvertures (235h) dans la seconde zone (A2).

2. Dispositif d'affichage selon la revendication 1, dans lequel la couche de réflexion (230) comprend :
une première unité de réflexion (231) s'étendant le long d'une première direction (R1) ; et
une seconde unité de réflexion (232) s'étendant le long d'une seconde direction (R2).

3. Dispositif d'affichage selon au moins l'une des revendications 1 ou 2, dans lequel la couche de réflexion (230) comprend un métal.

4. Dispositif d'affichage selon la revendication 3, dans lequel le métal comprend au moins l'un parmi l'aluminium (Al), l'argent (Ag), le titane (Ti) et le chrome (Cr).

5. Dispositif d'affichage selon au moins l'une des revendications 1 à 4, dans lequel la couche de réflexion (230) a une épaisseur dans une plage d'environ 10 nanomètres à environ 300 nanomètres.

6. Dispositif d'affichage selon au moins l'une des revendications 1 à 5, dans lequel chaque ouverture (235) a une taille dans une plage d'environ 50 % à environ 100 % d'une taille de l'électrode de pixel (180) correspondante.
